(19) Europäisches Patentamt
European Patent Office
Office européen des brevets

(11) EP 1 725 100 B1

(12) EUROPÄISCHE PATENTSCHRIFT

(45) Veröffentlichungstag und Bekanntmachung des Hinweises auf die Patenterteilung:
**05.11.2014 Patentblatt 2014/45**

(51) Int Cl.:
***A01N 47/38*** *(2006.01)* ***A01N 41/10*** *(2006.01)*
***A01P 13/00*** *(2006.01)*

(21) Anmeldenummer: **05707526.9**

(22) Anmeldetag: **19.02.2005**

(86) Internationale Anmeldenummer:
**PCT/EP2005/001739**

(87) Internationale Veröffentlichungsnummer:
**WO 2005/087004 (22.09.2005 Gazette 2005/38)**

(54) **HERBIZIDE AUF BASIS VON SUBSTITUIERTEN THIEN-3-YL-SULFONYLAMINO(THIO) CARBONYL-TRIAZOLIN(THI)ONEN UND 4-HPPD-HEMMSTOFFEN**

HERBICIDES BASED ON SUBSTITUTED THIEN-3-YL-SULPHONYLAMINO(THIO)CARBONYL-TRIAZOLIN(THI)ONES AND 4-HPPD-INHIBITORS

HERBICIDES A BASE DE THIEN-3-YL-SULFONYLAMINO(THIO)CARBONYL-TRIAZOLINE(THI) ONES SUBSTITUEES ET D'INHIBITEURS DE 4-HPPD

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **05.03.2004 DE 102004010813**

(43) Veröffentlichungstag der Anmeldung:
**29.11.2006 Patentblatt 2006/48**

(73) Patentinhaber: **Bayer CropScience Aktiengesellschaft**
**40789 Monheim (DE)**

(72) Erfinder:
- **DOLLINGER, Markus**
  **F-69009 Lyon (FR)**
- **SANTEL, Hans-Joachim**
  **51371 Leverkusen (DE)**
- **GESING, Ernst, Rudolf**
  **40699 Erkrath (DE)**
- **HACKER, Erwin**
  **65239 Hochheim (DE)**

(74) Vertreter: **Schwenk, Norbert et al**
**Bayer CropScience AG**
**Patent- und Lizenzabteilung**
**Industriepark Hoechst, Gebäude K 607**
**65926 Frankfurt am Main (DE)**

(56) Entgegenhaltungen:
**WO-A-03/026426**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft neue herbizide, synergistische Wirkstoffkombinationen, die bekannte substituierte Thien-3-yl-sulfonylamino(thio)carbonyl-triazolin(thi)one einerseits und eine oder mehrere bekannte herbizid wirksame Verbindungen andererseits und gegebenenfalls zusätzlich eine die Kulturpflanzen-Verträglichkeit verbessernde Verbindung enthalten und mit besonders gutem Erfolg zur Unkrautbekämpfung in verschiedenen Nutzpflanzenkulturen oder auch zur Bekämpfung von monokotylen und dikotylen Unkräutern im semi- und nicht-selektiven Bereich verwendet werden können.

Substituierte Thien-3-yl-sulfonylamino(thio)carbonyl-triazolin(thi)one sind als wirksame Herbizide bekannt (vgl. WO-A-01/05788). Auch Herbizide enthaltend diese Verbindungen und andere bekannte Herbizide oder Safener sind bekannt (vgl. WO-A-03/026427 und WO-A-03/026426). Die Wirkung dieser Herbizide ist jedoch nicht unter allen Bedingungen ganz zufriedenstellend.

Überraschenderweise wurde nun gefunden, dass eine Reihe von Wirkstoffen aus der Reihe der substituierten Thien-3-yl-sulfonylamino(thio)carbonyl-triazolin(thi)one bei gemeinsamer Anwendung mit bestimmten herbizid wirksamen Verbindungen synergistische Effekte hinsichtlich der Wirkung gegen Unkräuter zeigen und besonders vorteilhaft als breit wirksame Kombinationspräparate zur selektiven Bekämpfung von monokotylen und dikotylen Unkräutern in Nutzpflanzenkulturen, wie z.B. in Baumwolle, Gerste, Kartoffeln, Mais, Raps, Reis, Roggen, Soja, Sonnenblumen, Weizen, Zuckerrohr und Zuckerrüben, aber auch zur Bekämpfung von monokotylen und dikotylen Unkräutern im semi- und nicht-selektiven Bereich verwendet werden können. Gegenstand der Erfindung sind herbizide Mittel, gekennzeichnet durch einen wirksamen Gehalt an einer Wirkstoffkombination bestehend aus

(a) dem Thien-3-yl-sulfonylaminocarbonyltriazolinon der Formel

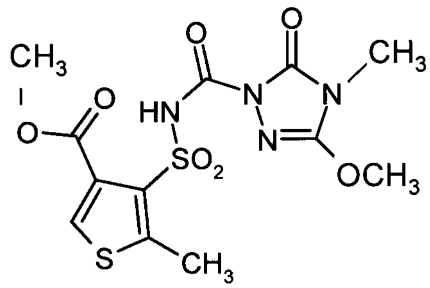

und

(b) der Verbindung

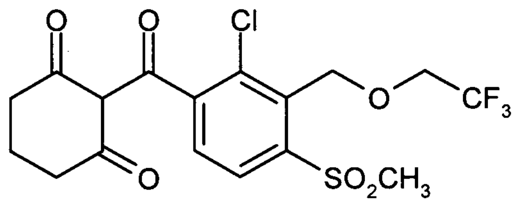

,

und gegebenenfalls zusätzlich

(c) einer die Kulturpflanzen-Verträglichkeit verbessernden Verbindung aus der folgenden Gruppe von Verbindungen: 4-Dichloracetyl-1-oxa-4-aza-spiro[4.5]-decan (AD-67), 4-Dichloracetyl-3,4-dihydro-3-methyl-2H-1,4-benzoxazin (Benoxacor), 5-Chlor-chinoxalin-8-oxy-essigsäure-(1-methylhexylester) (Cloquintocet-mexyl), 2,4-Dichlor-phenoxyessigsäure (2,4-D), 2,2-Dichlor-N,N-di-2-propenyl-acetamid (Dichlormid), N-(4-Methyl-phenyl)-N'-(1-methyl-1-phenylethyl)-harnstoff (Daimuron), 4,6-Dichlor-2-phenyl-pyrimidin (Fenclorim), 1-(2,4-Dichlor-phenyl)-5-trichlormethyl-1H-1,2,4-triazol-3-carbonsäure-ethylester (Fenchlorazol-ethyl), 2-Chlor-4-trifluormethyl-thiazol-5-carbonsäure-phenyl-methylester (Flurazole), 4-Chlor-N-(1,3-dioxolan-2-yl-meth-oxy)-a-trifluor-acetophenonoxim (Fluxofenim), 3-Dichlor-acetyl-5-(2-furanyl)-2,2-dimethyl-oxazolidin (Furilazole), Ethyl-4,5-dihydro-5,5-diphenyl-3-isoxazolcarboxylat (Isoxadifen-ethyl), (4-Chlor-2-methyl-phenoxy)-essigsäure (MCPA), (+-)-2-(4-Chlor-2-methyl-phenoxy)-propansäure (Mecoprop), Diethyl-1 -(2,4-dichlorphenyl)-4,5-dihydro-5-methyl-1 H-pyrazol-3,5-dicarboxylat (Mefenpyr-diethyl), 2-Di-chlormethyl-2-methyl-1,3-dioxolan (MG-191, CAS-Reg. Nr. 96420-72-3), 1,8-Naphthalsäureanhydrid, α-(1,3-Dioxolan-2-yl-methoximino)-phenylacetonitril (Oxabetrinil), 2,2-Di-chlor-N-(1,3-dioxolan-2-yl-methyl)-N-(2-propenyl)-acetamid (PPG-1292), 3-Dichloracetyl-2,2,5-trimethyl-oxazolidin (R-29148), N-Cyclopropyl-4-[[(2-methoxy-5-methyl-benzoyl)-amino]-sulfonyl]-benzamid, N-[[(4-Methylaminocarbonyl-amino)-phenyl]-sulfonyl-2-methoxy-benzamid und Verbindungen der nachfolgenden Formel (II),

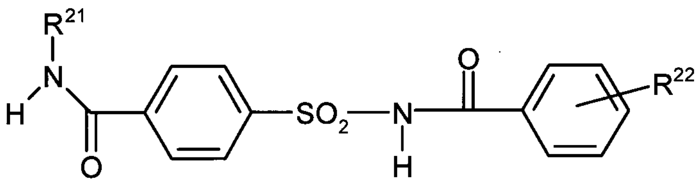

(II)

in der
$R^{21}$ und $R^{22}$ die in der folgenden Tabelle angegebene Bedeutung haben,

| $R^{21}$ | $R^{22}$ |
|---|---|
| Cyclo-Propyl | 2-$OCH_3$ |
| Cyclo-Propyl | 2-$OCH_3$, 5-Cl |
| Ethyl | 2-$OCH_3$ |
| iso-Propyl | 2-$OCH_3$, 5-Cl |
| iso-Propyl | 2-$OCH_3$ |

Die Verbindung B.3 ist aus der WO 00/21924 bekannt.

Vorzugsweise enthalten die erfindungsgemäßen Mittel gegebenenfalls einen Wirkstoff der Gruppe 3.

Die Verbindungen der Gruppe 3 sind ebenfalls bekannte Verbindungen, die beispielsweise aus dem Pesticide Manual, 13th edition, editor: C.D.S. Tomlin, 2003 bekannt sind.

Bevorzugt unter den Wirkstoffen der Gruppe 3 sind Benoxacor, Mefenpyr, Fenchlorazol, Isoxadifen, Cloquintocet und deren $C_1$-$C_{10}$-Alkylester, insbesondere Benoxacor (S 4-1), Mefenpyrdiethyl (S 1-1), Fenchlorazol-ethyl (S 1-6), Isoxadifen-ethyl (S 1-9), Cloquintocet-mexyl (S 2-1), und die Verbindung (S 3-1).

Am meisten bevorzugt sind die folgenden Zweierkombinationen mit den bevorzugten Wirkstoffen der Gruppe 3 I-2 + B.3 + S 4-1.

In allen oben explizit aufgezählten Wirkstoffkombinationen mit und ohne Safenerzusatz können die Verbindungen der Formel (I) auch durch ihre Salze, insbesondere ihr Natriumsalz ersetzt werden.

Diese Mischungen weisen zudem zum Teil zusätzliche Vorteile auf, die in besseren Eigenschaften der Wirkstoffformulierung, wie z.B. Aktivität oder Lagerstabilität, zum Ausdruck kommen.

All den einzeln aufgelisteten Wirkstoffkombinationen kann gegebenenfalls zur Verbesserung der Wirkeigenschaften gegenüber den Unkräutern und/oder Verbesserung der Selektivität gegenüber den Kulturpflanzen eines der folgenden Herbizide zugegeben werden, die aus dem e-Pesticide Manual of the British Crop Protection council, 2002-2003, 12th edition, Editor C.D.S. Tomlin, aus der WO 03/026426 oder den angegebenen Literaturstellen bekannt sind:

Acetochlor (C.1), Acifluorfen , Acifluorfen-sodium (C.2), Aclonifen (C.3), Alachlor (C.4), Alloxydim (C.5), Alloxydim-sodium, (C.6), Ametryn (C.7), Amicarbazone (C.8), Amidosulfuron (C.9), Amitrole (C.10), Anilofos (C.11), Asulam (C.12) und Asulam-sodium (C.13), Atrazine (C.14), Azafenidin (C.15), Azimsulfuron (C.16), Beflubutamid (C.17), Benazolin (C.18) und Benazolin-ethyl (C.19), Benfluralin (C.20), Benfuresate (C.21), Bensulfuron-methyl (C.22), Bentazone (C.23), Benthiocarb (C.24), Benzfendizone (C.25), Benzobicyclon (C.26), Benzofenap (C.274), Bifenox (C.275), Bispyribac-sodium (C.27), Bromacil (C.28), Bromobutide (C.29), Bromofenoxim (C.30), Bromoxynil (C.31), Bromoxynyl-heptanoat (C.32), Bromoxynil-octanoat (C.33), Bromoxynil-potassium (C.34), Butachlor (C.35), Butafenacil (C.36), Butralin (C.37), Butroxydim (C.38), Butylate (C.39), Cafenstrole (C.40), Carbetamide (C.41), Carfentrazone-ethyl (C.42), Chlometoxyfen (C.43), Chloridazon (C.44), Chlorimuron-ethyl (C.45), Chlornitrofen (C.46), Chlorotoluron (C.47), Chlorsulfuron (C.48), Cinidon-ethyl (C.50), Cinmethylin (C.51), Cinosulfuron (C.52), Clefoxydim (C.53), Clethodym (C.54), Clodinafop-propargyl (C.55), Clomazone (C.56), Clomeprop (C.57), Clopyralid (C.58), Cloransulam-methyl (C.59), Cumyluron (C.60), Cyanazine (C.61), Cyclosulfamuron (C. 62); Cycloxydim (C.63), Cyhalofop-butyl (C.64), 2,4-D (C.65) und seine Salze (C.66), Amine (C.67) und Ester (C.68), Desmedipham (C.69), Dicamba (C.70) und seine Salze (C.71), Dicamba-diolamine (C.72), Dichlobenil (C.73), Dichlorprop-P (C.74), Diclofop-methyl (C.75), Diclosulam (C.76), Difenzoquat (C.77), Difenzoquat metilsulfate (C.78), Diflufenican (C.79), Diflufenzopyr (C.80), Dimefuron (C.81), Dimepiperate (C.82), Dimethachlor (C.83), Dimethametryn (C.84), Dimethenamid (C.85), Dimthenamid-P (C.86), Dimexyflam (C.87), Diquat-dibromide (C.88), Dithiopyr (C.89), Diuron (C.90), Dymron (C.91), EPTC (C.92), Esprocarb (C.93), Ethalfluralin (C.9.4), Ethametsulfuronmethyl (C.95), Ethofumesate (C.96), Ethoxyfen (C.97), Ethoxysulfuron (C.98) und dessen Natriumsalz (C.99), Ethobenzanid (C.100), Fenoxaprop-P-ethyl (C.101), Fentrazamide (C.102), Flamprop-M-methyl (C.103) und -M-isopropyl (C.104), Flazasulfuron (C.105), Florasulam (C.106), Fluazofop-P-ethyl (C.107), Fluazifop-P-butyl (C.108), Flucarbazone-sodium (C.109), Fluazolate (C.110), Flufenacet (C.111), Flufenpyr (C.112), Flumetsulam (C.113), Flumicloracpentyl (C.114), Flumioxazin (C.115), Flumipropyn (C.116), Fluometuron (C.117), Fluorochloridone (C.118), Fuoroglycofen-ethyl (C.119), Flupoxam (C.120), Flupropacil (C.121), Flupyrsulfuron-methyl (C.122) und dessen Natriumsalz (C.123), Flurenol (C.124), Fluroxypyr (C.125) und seine Ester (C.126) wie Fluroxypyr-meptyl (C.127), Flurtamone (C.128), Fluthiacetmethyl (C.129), Fomesafen (C.130), Foramsulfuron (C.131), Glufosinate (C.132), Glufosinateammonium (C.133), Glyphosate (C.134), Glyphosate-ammonium (C.135), Glyphosateisopropylammonium (C.136), Glyphosate-sodium (C.137), Glyphosate-trirriesium (C.138), Halosulfuron-methyl (C.139), Haloxyfop (C.140), -methyl (C.141), -P-methyl (C.142), - ethoxyethyl (C.143) oder-butyl (C.144), Hexazinone (C.145), Imazamethabenz-methyl (C.146), Imazamox (C.147), Imazapic (C.148), Imazapyr (C.149), Imazaquin (C.150), Imazethpyr (C.151), Imazosulfuron (C.152), Indanofan (C.153), Iodosulfuron-methyl-sodium (C.154), Ioxynil (C.155), Ioxynil-octanoate (C.156), Ioxynil-sodium (C.157), Isoproturon (C.158), Isouron (C.159), Isoxaben (C.160), Isoxachlortole (C.161) ([4-chlor-2-(methylsulfonyl)phenyl](5-cyclopropyl-4-isoxazolyl)-methanon bekannt aus EP 470 856), Isoxaflutole (C.162), Ketospiradox (C.163), Lactofen (C.164), Lenacil (C.165), Linuron (C.166), MCPA (C.167), Mecoprop-P (C.168), Mefenacet (C.169), Mesosulfuron-methyl (C.170) und dessen Natrium-salz (C.171), Mesotrione (C.172), Metamitron (C.173), Metazachlor (C.174), Methabenzthiazuron (C.175), Metobromuron (C.176), Metolachlor (C.177), S-Metolachlor (C.178), Metosulam (C.179), Metoxuron (C.180), Metribuzin (C.181), Metsulfuron (C.182), Metsulfuron-methyl (C.183), Molinate (C.184), Naproanilide (C.185), Napropamide (C.186), Neburon (C.187), Nicosulfuron (C.188), Norflurazon (C.189), Orbencarb (C.190), Oryzalin (C.191), Oxadiargyl (C.192), Oxadiazon (C.193), Oxasulfuron (C.194), Oxaziclomefone (C.195), Oxyfluorfen (C.196), Paraquat (C.197), Pendimethalin (C.198), Pendralin (C.199), Penoxsulam (C.200), Pentoxazone (C.201), Penthoxamid (C.202), Phenmedipham (C.203), Picloram (C.204), Picolinafen (C.205), Piperophos (C.206), Pretilachlor (C.207), Primisulfuron-methyl (C. 208), Profluazol" (C.209), Profoxydim (C.210), Prometryn (C.211), Propachlor (C.212), Propanil (C.213), Propaquizafop (C.49), Propisochlor (C.214), Propoxycarbazone-sodium (C.215), Propyzamide (C.216), Prosulfocarb (C.217); Prosulfuron (C.218), Pyraclonil (C.219) (1-(3-chlor-4,5,6,7-tetrahydropyrazolo[1,5-a]pyridin-2-yl)-5-(methyl-2-propinylamino)-1H-pyrazole-4-carbonitril bekannt aus WO 94/08999), Pyraflufen-ethyl (C.220), Pyrazolate (C.221), Pyrazosulfuron-ethyl (C.222), Pyrazoxyfen (C.223), Pyribenzoxym (C.224), Pyributicarb (C.225), Pyridafol (C.226), Pyridate (C.227), Pyridatol (C. 228), Pyriftalid (C. 229), Pyriminobac-methyl (C.230), Pyrithiobac-sodium (C.231), Quinchlorac (C. 232), Quinmerac (C.233), Quinoclamine (C.234), Quizalofop (C.235), -ethyl (C.236), -P-ethyl (C.237) und -P-tefuryl (C.238), Rimsulfuron (C.239), Sethoxydim (C.240), Simazine (C.241), Sulcotrione (C.242), Sulfentrazone (C.243), Sulibmeturon-methyl (C.244), Sulfosate (C.245), Sulfosulfuron (C.246), Tebuthiuron (C.247), Tepraloxydim (C.248), Terbuthylazine (C.249), Terbutryn (C.250), Thenylchlor (C.251), Thiazopyr (C.252), Thifensulfuron-methyl (C.253), Thiocarbazil (C.254), Tralkoxydim (C.255), Triallate (C.256), Triasulfuron (C.276), Tribenuron-methyl (C.257), Triclopyr (C.258), Tridiphane (C.259), Trifloxysulfuron (C.260), Trifluralin (C.261), Triflusulfuron-methyl (C.262), Tritosulfuron (C.263) (N-[[[4-methoxy-6-(trifluormethyl)-1,3,5-triazin-2-yl]amino]carbonyl]-2-(trifluormethyl)-benzolsulfonamid (C.264) bekannt aus DE 4 038 430), N-[[(4,6-Dimethoxy-2-pyrimidinyl)-amino]-carbonyl]-3-(N-methyl-N-methylsulfonyl-amino])-2-pyridinsulfonamid (C.265), (vgl. WO-A-92/10660), N-[[(4,6-Dimethoxy-2-pyrimi-dinyl)-amino]-carbonyl]-3-(N-methyl-N-methylsulfonyl-amino)-2-pyridinsulfonamid (C.266), (vgl. WO-A-92/10660), 4-(4,5-Dihydro-4-methyl-5-oxo-3-trifluormethyl-1H-1,2,4-triazol-1-yl)-2-(ethyl-sulfonylamino)-5-fluor-benzolcarbothioamid (C.267, HWH4991, vgl. WO-A-95/30661), 2-Chlor-N-[1-(2,6-dichlor-4-difluormethyl-phenyl)-4-nitro-1H-pyrazol-5-yl]-propancarbonsäureamid (C.268, SLA5599, vgl. EP-A-303153), [2-Chlor-3-(4,5-dihydro-3-isoxazolyl)-4-methylsulfonyl-phenyl]-(5-hydrox-1-methyl-1H-pyrazol-4-yl)-methanon (C.269) (vgl.WO-A-96/26206, WO-A-98/31681), [3-(4,5-Dihydro-3-isoxazolyl)-2-methyl-4-methylsulfonyl-phenyl]-(5-hydrox-1-methyl-1H-pyrazol-4-yl)-methanon (C.270) (vgl.WO-A-96/26206, WO-A-98/31681), [3-[2-Chlor-3[(2,6-dioxo-cyclohexyl)-carbonyl]-6-ethylsulfonyl-phenyl]-5-isoxazolyl]-acetonitril (C.271) (vgl. WO-A-01/28341), 2-[2-Chlor-4-methylsulfonyl-3-[(2,2,2-trifluor-ethoxy)-methyl]-benzoyl]-1,3-cyclo-hexandion (C.272)(vgl. WO-A-01/28341), 2-[[5,8-Dimethyl-1,1-dioxido-4-(2-pyrimidinyloxy)-3,4-dihydro-2H-thiochromen-6-yl]-carbonyl]-1,3-cyclohexandion (C.273) (vgl. WO-A-01/28341).

Es wurde nun überraschend gefunden, dass die vorstehend definierten Wirkstoffkombinationen aus den substituierten Thien-3-yl-sulfonylamino(thio)carbonyl-triazolin(thi)onen der Formel (I) und den vorstehend angeführten Wirkstoffen der Gruppe 2 und gegebenenfalls zusätzlich 3 bei sehr guter Nutzpflanzen-Verträglichkeit eine besonders hohe herbizide Wirksamkeit aufweisen und in verschiedenen Kulturen, vor allem in Baumwolle, Gerste, Kartoffeln, Mais, Raps,

Reis, Roggen, Soja, Sonnenblumen, Weizen, Zuckerrohr und Zuckerrüben, insbesondere in Gerste, Mais, Reis und Weizen, zur selektiven Bekämpfung von monokotylen und dikotylen Unkräutern verwendet werden können und dass sie auch zur Bekämpfung von monokotylen und dikotylen Unkräutern im semi- und nicht-selektiven Bereich verwendet werden können.

Überraschenderweise ist die herbizide Wirksamkeit der erfindungsgemäßen Wirkstoffkombinationen aus Verbindungen der oben aufgeführten Gruppen 1 und 2 erheblich höher als die Summe der Wirkungen der einzelnen Wirkstoffe.

Es liegt somit ein nicht vorhersehbarer synergistischer Effekt vor und nicht nur eine Wirkungsergänzung. Die neuen Wirkstoffkombinationen sind in vielen Kulturen gut verträglich, wobei die neuen Wirkstoffkombinationen auch sonst schwer bekämpfbare Unkräuter gut bekämpfen. Die neuen Wirkstoffkombinationen stellen somit eine wertvolle Bereicherung der Herbizide dar.

Der synergistische Effekt der erfindungsgemäßen Wirkstoffkombinationen ist bei bestimmten Konzentrationsverhältnissen besonders stark ausgeprägt. Jedoch können die Gewichtsverhältnisse der Wirkstoffe in den Wirkstoffkombinationen in relativ großen Bereichen variiert werden. Im allgemeinen entfallen auf 1 Gewichtsteil Wirkstoff der Formel (I) 0,001 bis 1000 Gewichtsteile, vorzugsweise 0,002 bis 500 Gewichtsteile, besonders bevorzugt 0,01 bis 100 Gewichtsteile und am meisten bevorzugt 0,1 bis 50 Gewichtsteile Wirkstoff der Gruppe 2.

Es ist als überraschend anzusehen, dass aus einer Vielzahl von bekannten Safenern oder Antidots, die befähigt sind, die schädigende Wirkung eines Herbizids auf die Kulturpflanzen zu antagonisieren, gerade die oben aufgeführten Verbindungen der Gruppe 3 geeignet sind, die schädigende Wirkung von Wirkstoffen der Formel (I) und deren Salzen, gegebenenfalls auch in Kombination mit einem oder mehreren der oben angeführten Wirkstoffe der Gruppe 2, auf die Kulturpflanzen annähernd vollständig aufzuheben, ohne dabei die herbizide Wirksamkeit gegenüber den Unkräutern zu beeinträchtigen.

Der vorteilhafte Effekt der Kulturpflanzenverträglichkeit der erfindungsgemäßen Wirkstoffkombinationen ist bei bestimmten Konzentrationsverhältnissen ebenfalls besonders stark ausgeprägt. Jedoch können die Gewichtsverhältnisse der Wirkstoffe in den Wirkstoffkombinationen in relativ großen Bereichen variiert werden. Im allgemeinen entfallen auf 1 Gewichtsteil Wirkstoff der Formel (I) oder dessen Mischungen mit Wirkstoffen der Gruppe 2 0,001 bis 1000 Gewichtsteile, vorzugsweise 0,01 bis 100 Gewichtsteile, besonders bevorzugt 0,1 bis 25 Gewichtsteile und am meisten bevorzugt 1 bis 10 Gewichtsteile einer der oben unter (c) genannten, die Kulturpflanzen Verträglichkeit verbessernden Verbindungen (Antidots/Safener).

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Pflanzenteile und Organe der Pflanzen, wie Spross, Blatt, Blüte und Wurzel verstanden werden, wobei beispielhaft Blätter, Nadeln, Stengel, Stämme, Blüten, Fruchtkörper, Früchte und Samen sowie Wurzeln, Knollen und Rhizome aufgeführt werden. Zu den Pflanzenteilen gehört auch vegetatives und generatives Vermehrungsmaterial, beispielsweise Stecklinge, Knollen, Rhizome, Ableger und Samen.

Die erfindungsgemäße Behandlung der Pflanzen und Pflanzenteile mit den Wirkstoffkombinationen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen und bei Vermehrungsmaterial, insbesondere bei Samen weiterhin durch ein- oder mehrschichtiges Umhüllen.

Wie bereits oben erwähnt, können mit den erfindungsgemäßen Wirkstoffkombinationen mit/oder ohne Zusatz von Verbindungen der Gruppe 3 alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden, gegebenenfalls in Kombination mit konventionellen Methoden erhalten wurden (Genetically Modified Organisms) und deren Teile behandelt. Der Begriff "Teile" bzw. "Teile von Pflanzen" oder "Pflanzenteile" wurde oben erläutert.

Besonders bevorzugt werden erfindungsgemäß Pflanzen der jeweils handelsüblichen oder in Gebrauch befindlichen Pflanzensorten behandelt. Unter Pflanzensorten versteht man Pflanzen mit bestimmten Eigenschaften ("Traits"), die durch konventionelle Züchtung, durch Mutagenese, oder auch durch rekombinante DNA-Techniken erhalten worden sind. Dies können Sorten, Bio- und Genotypen sein.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel - auch in Kombination

mit anderen agrochemischen Wirkstoffen, besseres Wachstum der Kulturpflanzen, erhöhte Toleranz der Kulturpflanzen gegenüber hohen oder niedrigen Temperaturen, erhöhte Toleranz der Kulturpflanzen gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Baumwolle, Raps sowie Obstpflanzen (mit den Früchten Äpfel, Birnen, Zitrusfrüchten und Weintrauben) erwähnt, wobei Mais, Soja, Kartoffel, Baumwolle und Raps besonders hervorgehoben werden. Als Eigenschaften ("Traits") werden besonders hervorgehoben die erhöhte Abwehr der Pflanzen gegen Insekten durch in den Pflanzen entstehende Toxine, insbesondere, solche, die durch das genetische Material aus Bacillus Thuringiensis (z.B. durch die Gene CryIA(a), CryIA(b), CryIA(c), CryIIA, CryIIIA, CryIIIB2, Cry9c Cry2Ab, Cry3Bb und CryIF sowie deren Kombinationen) in den Pflanzen erzeugt werden (im folgenden "Bt Pflanzen"). Als Eigenschaften ("Traits") werden auch besonders hervorgehoben die erhöhte Abwehr von Pflanzen gegen Pilze, Bakterien und Viren durch Systemische Akquirierte Resistenz (SAR), Systemin, Phytoalexine, Elicitoren sowie Resistenzgene und entsprechend exprimierte Proteine und Toxine. Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinothricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucotn® (Baumwolle) und NewLeaf® (Kartoffel) vertrieben werden..Als Beispiele für Herbizid-tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinothricin, z.B. Raps), IMI® (Toleranz gegen Imidazolinone) und STS® (Toleranz gegen Sulfonylharnstoffe z.B. Mais) vertrieben werden. Als Herbizid-resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Die aufgeführten Pflanzen können besonders vorteilhaft mit den erfindungsgemäßen Wirkstoffkombinationen behandelt werden, wobei zusätzlich zu der guten Bekämpfung der Unkrautpflanzen die oben genannten synergistischen Effekte mit den transgenen Pflanzen oder Pflanzensorten auftreten. Die bei den Wirkstoffen bzw. Mischungen oben angegebenen Vorzugsbereiche gelten auch für die Behandlung dieser Pflanzen. Besonders hervorgehoben sei die Pflanzenbehandlung mit den im vorliegenden Text speziell aufgeführten Verbindungen bzw. Mischungen.

Die erfindungsgemäßen Wirkstoffkombinationen können z.B. bei den folgenden Pflanzen verwendet werden:

<u>Dikotyle Unkräuter der Gattungen</u>: Abutilon, Amaranthus, Ambrosia, Anoda, Anthemis, Aphanes, Atriplex, Bellis, Bidens, Capsella, Carduus, Cassia, Centaurea, Chenopodium, Cirsium, Convolvulus, Datura, Desmodium, Emex, Erysimum, Euphorbia, Galeopsis, Galinsoga, Galium, Hibiscus, Ipomoea, Kochia, Lamium, Lepidium, Lindernia, Matricaria, Mentha, Mercurialis, Mullugo, Myosotis, Papaver, Pharbitis, Plantago, Polygonum, Portulaca, Ranunculus, Raphanus, Rorippa, Rotala, Rumex, Salsola, Senecio, Sesbania, Sida, Sinapis, Solanum, Sonchus, Sphenoclea, Stellaria, Taraxacum, Thlaspi, Trifolium, Urtica, Veronica, Viola, Xanthium.

<u>Dikotyle Kulturen der Gattungen</u>: Arachis, Beta, Brassica, Cucumis, Cucurbita, Helianthus, Daucus, Glycine, Gossypium, Ipomoea, Lactuca, Linum, Lycopersicon, Nicotiana, Phaseolus, Pisum, Solanum, Vicia.

<u>Monokotyle Unkräuter der Gattungen</u>: Aegilops, Agropyron, Agrostis, Alopecurus, Apera, Avena, Brachiaria, Bromus, Cenchrus, Commelina, Cynodon, Cyperus, Dactyloctenium, Digitaria, Echinochloa, Eleocharis, Eleusine, Eragrostis, Eriochloa, Festuca, Fimbristylis, Heteranthera, Imperata, Ischaemum, Leptochloa, Lolium, Monochoria, Panicum, Paspalum, Phalaris, Phleum, Poa, Rottboellia, Sagittaria, Scirpus, Setaria, Sorghum.

Monokotyle Kulturen der Gattungen: Allium, Ananas, Asparagus, Avena, Hordeum, Oryza, Panicum, Saccharum, Secale, Sorghum, Triticale, Triticum, Zeä.

Die Verwendung der erfindungsgemäßen Wirkstoffkombinationen ist jedoch keineswegs auf diese Gattungen beschränkt, sendern erstreckt sich in gleicher Weise auch auf andere Pflanzen.

Die erfindungsgemäß zu verwendenden Wirkstoffkombinationen können sowohl in konventionellen Anbauverfahren (Reihenkulturen mit geeigneter Reihenweite) in Plantagenkulturen (z.B. Wein, Obst, Zitrus) sowie in Industrie- und Gleisanlagen, auf Wegen und Plätzen, aber auch zur Stoppelbehandlung und beim Minimum-Tillage-Verfahren eingesetzt werden. Sie eignen sich weiterhin als Abbrenner (Krautabtötung z.B. in Kartoffeln) oder als Defoliantien (z.B. in Baumwolle). Ferner sind sind sie für den Einsatz auf Bracheflächen geeignet. Weitere Einsatzgebiete sind Baumschulen, Forst, Grünland und Zierpflanzenbau.

Die Wirkstoffkombinationen können in die üblichen Formulierungen übergeführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur- und synthetische Stoffe sowie Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methyl-isobutylketon oder Cyclohexanon, stark polare Lösungsmittel, wie Dimethylformamid und Dimethylsulfoxid, sowie Wasser.

Als feste Trägerstoffe kommen in Frage:

z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent an Wirkstoffen, vorzugsweise zwischen 0,5 und 90 %.

Die erfindungsgemäßen Wirkstoffkombinationen werden im allgemeinen in Form von Fertigformulierungen zur Anwendung gebracht. Die in den Wirkstoffkombinationen enthaltenen Wirkstoffe können aber auch in Einzelformulierungen bei der Anwendung gemischt, d.h. in Form von Tankmischungen zur Anwendung gebracht werden.

Die neuen Wirkstoffkombinationen können als solche oder in ihren Formulierungen weiterhin auch in Mischung mit anderen bekannten Herbiziden Verwendung finden, wobei wiederum Fertigformulierungen oder Tankmischungen möglich sind. Auch eine Mischung mit anderen bekannten Wirkstoffen, wie Fungiziden, Insektiziden, Akariziden, Nematiziden, Schutzstoffen gegen Vogelfraß, Wuchsstoffen, Pflanzennährstoffen und Bodenstrukturverbesserungsmitteln ist möglich. Für bestimmte Anwendungszwecke, insbesondere im Nachauflauf-Verfahren, kann es ferner vorteilhaft sein, in die Formulierungen als weitere Zusatzstoffe pflanzenverträgliche mineralische oder vegetabilische Öle (z.B. das Handelspräparat "Rako Binol") oder Ammoniumsalze wie z.B. Ammoniumsulfat oder Ammoniumrhodanid aufzunehmen.

Die neuen Wirkstoffkombinationen können als solche, in Form ihrer Formulierungen oder der daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen,

Sprühen, Stäuben oder Streuen.

Die erfindungsgemäßen Wirkstoffkombinationen können vor und nach dem Auflaufen der Pflanzen appliziert werden, also im Vorauflauf und Nachauflauf-Verfahren. Sie können auch vor der Saat in den Boden eingearbeitet werden.

Die gute herbizide Wirkung der neuen Wirkstoffkombinationen geht aus den nachfolgenden Beispielen hervor. Während die einzelnen Wirkstoffe in der herbiziden Wirkung Schwächen aufweisen, zeigen die Kombinationen durchweg eine sehr gute Unkrautwirkung, die über eine einfache Wirkungssummierung hinausgeht.

Ein synergistischer Effekt liegt bei Herbiziden immer dann vor, wenn die herbizide Wirkung der Wirkstoffkombination größer ist als die der einzelnen applizieren Wirkstoffe.

Die zu erwartende Wirkung für eine gegebene Kombination zweier Herbizide kann wie folgt berechnet werden (vgl. COLBY, S.R.: "Calculating synergistic and antagonistic responses of herbicide combinations", Weeds 15, Seiten 20 - 22, 1967):

Wenn

X = % Schädigung durch Herbizid A (Wirkstoff der Formel I) bei p kg/ha Aufwandmenge und

Y = % Schädigung durch Herbizid B (Wirkstoff der Formel II) bei q kg/ha Aufwandmenge und

E = die erwartete Schädigung der Herbizide A und B bei p und q kg/ha Aufwandmenge,

dann ist

$$E = X + Y - (X * Y/100).$$

Ist die tatsächliche Schädigung größer als berechnet, so ist die Kombination in ihrer Wirkung überadditiv, das heißt, sie zeigt einen synergistischen Effekt.

Die zu erwartende Wirkung für eine gegebene Kombination dreier Herbizide kann ebenfalls der oben angegebenen Literatur entnommen werden.

**Tabelle A-5**

| Wirkstoff bzw. Wirkstoffkombination | Aufwandmenge(n) (g a.i./ha) | Wirkung gegen Alopecurus myosuroides (%) | Berechnete Wirkung nach Colby (%) |
|---|---|---|---|
| Verbindung (I-2) | 1,88 | 45 | |
| Verbindung (B.3) | 3,75 | 0 | |
| Verbindung (I-2) + Verbindung (B.3) | 1,88 + 3,75 | 58 | 45 |

**Tabelle A-6**

| Wirkstoff bzw. Wirkstoffkombination | Aufwandmenge(n) (g a.i./ha) | Wirkung gegen Avena fatua (%) | Berechnete Wirkung nach Colby (%) |
|---|---|---|---|
| Verbindung (I-2) | 1,88 | 83 | |
| Verbindung (B.3) | 3,75 | 0 | |
| Verbindung (I-2) + Verbindung (B.3) | 1,88 + 3,75 | 90 | 83 |

**Tabelle A-7**

| Wirkstoff bzw. Wirkstoffkombination | Aufwandmenge(n) (g a.i./ha) | Wirkung gegen Avena fatua (%) | Berechnete Wirkung nach Colby (%) |
|---|---|---|---|
| Verbindung (I-2) | 1,88 | 20 | |
| Verbindung (B.3) | 3,75 | 88 | |
| Verbindung (I-2) + Verbindung (B.3) | 1,88 + 3,75 | 93 | 90 |

## Patentansprüche

**1.** Mittel, **gekennzeichnet durch** einen wirksamen Gehalt an einer Wirkstoffkombination bestehend aus

(a) dem Thien-3-yl-sulfonylaminocarbonyltriazolinon der Formel

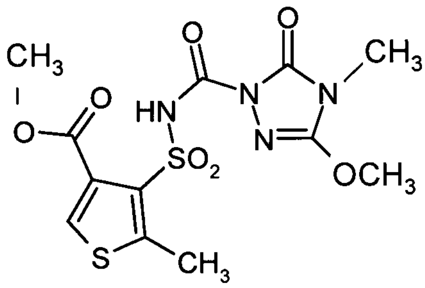

und
(b) der Verbindung

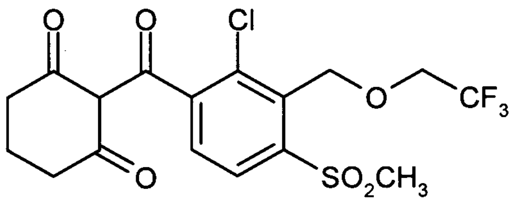

,

und gegebenenfalls zusätzlich
(c) einer die Kulturpflanzen-Verträglichkeit verbessernden Verbindung aus der folgenden Gruppe von Verbindungen:

4-Dichloracetyl-1-oxa-4-aza-spiro[4.5]-decan (AD-67), 4-Dichloracetyl-3,4-dihydro-3-methyl-2H-1,4-benzoxazin (Benoxacor), 5-Chlor-chinoxalin-8-oxy-essigsäure-(1-methylhexylester) (Cloquintocet-mexyl), 2,4-Dichlor-phenoxyessigsäure (2,4-D), 2,2-Dichlor-N,N-di-2-propenyl-acetamid (Dichlormid), N-(4-Methyl-phenyl)-N'-(1-methyl-1-phenylethyl)-harnstoff (Daimuron), 4,6-Dichlor-2-phenyl-pyrimidin (Fenclorim), 1-(2,4-Dichlor-phenyl)-5-trichlormethyl-1H-1,2,4-triazol-3-carbonsäure-ethylester (Fenchlorazol-ethyl), 2-Chlor-4-trifluormethyl-thiazol-5-carbonsäure-phenyl-methylester (Flurazole), 4-Chlor-N-(1,3-dioxolan-2-yl-meth-oxy)-a-trifluor-acetophenonoxim (Fluxofenim), 3-Dichlor-acetyl-5-(2-furanyl)-2,2-dimethyl-oxazolidin (Furilazole), Ethyl-4,5-dihydro-5,5-diphenyl-3-isoxazolcarboxylat (Isoxadifen-ethyl), (4-Chlor-2-methyl-phenoxy)-essigsäure (MCPA), (+-)-2-(4-Chlor-2-methyl-phenoxy)-propansäure (Mecoprop), Diethyl-1-(2,4-dichlorphenyl)-4,5-dihydro-5-methyl-1 H-pyrazol-3,5-dicarboxylat (Mefenpyr-diethyl), 2-Di-chlormethyl-2-methyl-1,3-dioxolan (MG-191, CAS-Reg. Nr. 96420-72-3), 1,8-Naphthalsäureanhydrid, $\alpha$-(1,3-Dioxolan-2-yl-methoximino)-phenylacetonitril (Oxabetrinil), 2,2-Di-chlor-N-(1,3-dioxolan-2-yl-methyl)-N-(2-propenyl)-acetamid (PPG-1292), 3-Dichloracetyl-2,2,5-trimethyl-oxazolidin (R-29148), N-Cyclopropyl-4-[[(2-methoxy-5-methyl-benzoyl)-amino]-sulfonyl]-benzamid, N-[[(4-Methylaminocarbonyl-amino)-phenyl]-sulfonyl-2-methoxy-benzamid und Verbindungen der nachfolgenden Formel (II),

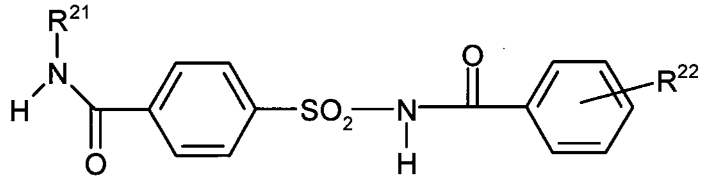

(II)

in der
$R^{21}$ und $R^{22}$ die in der folgenden Tabelle angegebene Bedeutung haben,

| $R^{21}$ | $R^{22}$ |
|---|---|
| Cyclo-Propyl | 2-$OCH_3$ |
| Cyclo-Propyl | 2-$OCH_3$, 5-Cl |
| Ethyl | 2-$OCH_3$ |
| iso-Propyl | 2-$OCH_3$, 5-Cl |
| iso-Propyl | 2-$OCH_3$ |

2. Mittel nach Anspruch 1, **dadurch gekennzeichnet, dass** die die Kulturpflanzen-Verträglichkeit verbessernde Verbindung ausgewählt ist aus den Wirkstoffen Benoxacor, Mefenpyr-diethyl, Fenchlorazolethyl, Isoxadifen-ethyl, Cloquintocet-mexyl und der Verbindung N-Cyclopropyl-4-[[(2-methoxy-benzoyl)-amino]-sulfonyl]-benzamid.

3. Verwendung eines Mittels nach Anspruch 1 zur Bekämpfung von unerwünschten Pflanzen.

4. Verfahren zur Bekämpfung von unerwünschten Pflanzen, **dadurch gekennzeichnet, dass** man ein Mittel gemäß Anspruch 1 auf die Unkräuter und/oder ihren Lebensraum einwirken lässt.

5. Verfahren zur Herstellung eines herbiziden Mittels, **dadurch gekennzeichnet, dass** man ein Mittel nach Anspruch 1 mit oberflächenaktiven Mitteln und /oder Streckmitten vermischt.

**Claims**

1. A composition comprising an effective amount of an active ingredient combination composed of

(a) the thien-3-ylsulfonylaminocarbonyltriazolinone of the formula

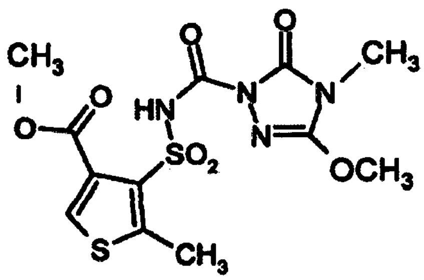

and
(b) the compound

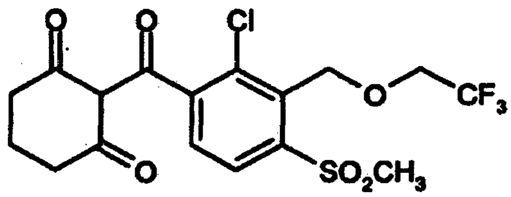

',

and, if desired, additionally

(c) a crop plant tolerance promoter compound from the following group of compounds:

4-dichloroacetyl-1-oxa-4-azaspiro[4.5]decane (AD-67), 4-dichloroacetyl-3,4-dihydro-3-methyl-2H-1,4-benzoxazine (benoxacor), 5-chloroquinoxalin-8-oxyacetic acid 1-methylhexyl ester (cloquintocet-mexyl), 2,4-dichlorophenoxyacetic acid (2,4-D), 2,2-dichloro-N,N-di-2-propenylacetamide (dichlormid), N-(4-methylphenyl)-N'-(1-methyl-1-phenylethyl)urea (daimuron), 4,6-dichloro-2-phenylpyrimidine (fenclorim), 1-(2,4-dichlorophenyl)-5-trichloromethyl-1H-1,2,4-triazole-3-carboxylic acid ethyl ester (fenchlorazole-ethyl), 2-chloro-4-trifluoromethylthiazole-5-carboxylic acid phenylmethyl ester (flurazole), 4-chloro-N-(1,3-dioxolan-2-ylmethoxy)-α-trifluoroacetophenone oxime (fluxofenim), 3-dichloroacetyl-5-(2-furanyl)-2,2-dimethyl-oxazolidine (furilazole), ethyl 4,5-dihydro-5,5-diphenyl-3-isoxazolecarboxylate (isoxadifen-ethyl), (4-chloro-2-methylphenoxy)acetic acid (MCPA), (+-)-2-(4-chloro-2-methylphenoxy)propanoic acid (mecoprop), diethyl 1-(2,4-dichlorophenyl)-4,5-dihydro-5-methyl-1H-pyrazole-3,5-dicarboxylate (mefenpyr-diethyl), 2-dichloromethyl-2-methyl-1,3-dioxolane (MG-191, CAS Reg. No. 96420-72-3), 1,8-naphthalic anhydride, α-(1,3-dioxolan-2-ylmethoximino)-phenylacetonitrile (oxabetrinil), 2,2-dichloro-N-(1,3-dioxolan-2-ylmethyl)-N-(2-propenyl)acetamide (PPG-1292), 3-dichloroacetyl-2,2,5-trimethyloxazolidine (R-29148), N-cyclopropyl-4-[[(2-methoxy-5-methylbenzoyl)amino]sulfonyl]benzamide, N-[[(4-methylaminocarbonylamino)phenyl]-sulfonyl-2-methoxybenzamide, and compounds of the formula (II) below,

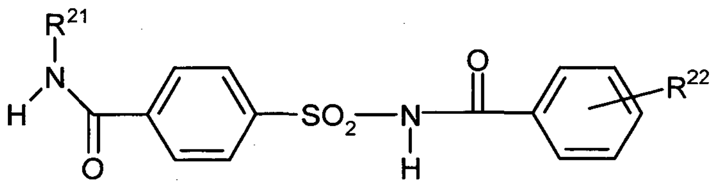

(II)

in which

$R^{21}$ and $R^{22}$ are as defined in the following table:

| $R^{21}$ | $R^{22}$ |
|---|---|
| cyclopropyl | 2-$OCH_3$ |
| cyclopropyl | 2-$OCH_3$, 5-Cl |
| ethyl | 2-$OCH_3$ |
| isopropyl | 2-$OCH_3$, 5-Cl |
| isopropyl | 2-$OCH_3$ |

**2.** The composition as claimed in claim 1, wherein the crop plant tolerance promoter compound is selected from the active ingredients benoxacor, mefenpyr-diethyl, fenchlorazole-ethyl, isoxadifen-ethyl, cloquintocet-mexyl, and the compound N-cyclopropyl-4-[[(2-methoxybenzoyl)amino]sulfonyl]-benzamide.

**3.** The use of a composition as claimed in claim 1 for controlling unwanted plants.

**4.** A method of controlling unwanted plants which comprises causing a composition as claimed in claim 1 to act on the weeds and/or their habitat.

**5.** A process for producing a herbicidal composition, which comprises mixing a composition as claimed in claim 1 with

surface-active agents and/or extenders.

## Revendications

1. Agent, **caractérisé par** une teneur active en une combinaison de substances actives constituée par

(a) la thién-3-ylsulfonylaminocarbonyltriazolinone de formule

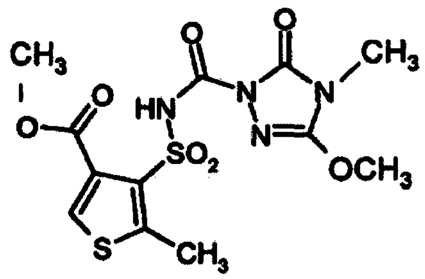

et

(b) le composé

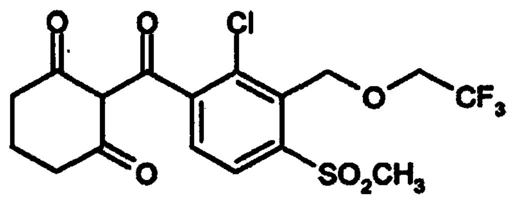

,

et le cas échéant en outre

(c) un composé améliorant la tolérance des plantes de culture du groupe suivant de composés :

le 4-dichloroacétyl-1-oxa-4-azaspiro[4,5]-décane (AD-67), la 4-dichloroacétyl-3,4-dihydro-3-méthyl-2H-1,4-benzoxazine (Benoxacor), l'ester 1-méthylhexylique de l'acide 5-chloroquinoxalin-8-oxyacétique (Cloquintocet-mexyl), l'acide 2,4-dichlorophénoxyacétique (2,4-D), le 2,2-dichloro-N,N-di-2-propénylacétamide (Dichloromid), la N-(4-méthylphényl)-N'-(1-méthyl-1-phényléthyl)-urée (Daimuron), la 4,6-dichloro-2-phénylpyrimidine (Fenclorim), l'ester éthylique de l'acide 1-(2,4-dichlorophényl)-5-trichlorométhyl-1H-1,2,4-triazole-3-carboxylique (Fenchlorazol-ethyl), l'ester phénylméthylique de l'acide 2-chloro-4-trifluorométhylthiazole-5-carboxylique (Flurazole), la 4-chloro-N-(1,3-dioxolan-2-ylméthoxy)-$\alpha$-trifluoroacétophénonoxime (Fluxofenim), la 3-dichloroacétyl-5-(2-furannyl)-2,2-diméthyloxazolidine (Furilazole), le 4,5-dihydro-5,5-diphényl-3-isoxazole-carboxylate d'éthyle (Isoxadifen-ethyl), l'acide (4-chloro-2-méthylphénoxy)-acétique (MCPA), l'acide (+-)-2-(4-chloro-2-méthylphénoxy)-propanoïque (Mecoprop), le 1-(2,4-dichlorophényl)-4,5-dihydro-5-méthyl-1H-pyrazole-3,5-dicarboxylate de diéthyle (Mefenpyr-diethyl), le 2-dichlorométhyl-2-méthyl-1,3-dioxolane (MG-191, n° de reg. CAS 96420-72-3), l'anhydride de l'acide 1,8-naphtalénique, l'a-(1,3-dioxolan-2-ylméthoximino)-phénylacétonitrile (Oxabetrinil), le 2,2-dichloro-N-(1,3-dioxolan-2-ylméthyl)-N-(2-propényl)-acétamide (PPG-1292), la 3-dichloroacétyl-2,2,5-triméthyloxazolidine (R-29148), le N-cyclopropyl-4-[[(2-méthoxy-5-méthylbenzoyl)-amino]-sulfonyl]-benzamide, le N-[[(4-méthylaminocarbonylamino)-phényl]-sulfonyl-2-méthoxybenzamide et les composés de la formule suivante (II),

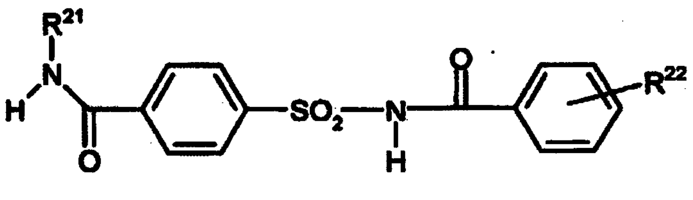

(II)

dans laquelle

$R^{21}$ et $R^{22}$ ont les significations indiquées dans le tableau suivant,

| $R^{21}$ | $R^{22}$ |
|---|---|
| cyclo-propyle | 2-$OCH_3$ |
| cyclo-propyle | 2-$OCH_3$, 5-Cl |
| éthyle | 2-$OCH_3$ |
| iso-propyle | 2-$OCH_3$, 5-Cl |
| iso-propyle | 2-$OCH_3$ |

2. Agent selon la revendication 1, **caractérisé en ce que** le composé améliorant la tolérance des plantes de culture est choisi parmi les substances actives Benoxacor, Mefenpyr-diethyl, Fenchlorazol-ethyl, Isoxadifen-ethyl, Cloquintocetmexyl et le composé N-cyclopropyl-4-[[(2-méthoxybenzoyl)-amino]-sulfonyl]-benzamide.

3. Utilisation d'un agent selon la revendication 1 pour lutter contre des plantes non souhaitées.

4. Procédé pour lutter contre des plantes non souhaitées, **caractérisé en ce qu'**on laisse agir un agent selon la revendication 1 sur les mauvaises herbes et/ou leur espace de vie.

5. Procédé pour la préparation d'un agent herbicide, **caractérisé en ce qu'**on mélange un agent selon la revendication 1 avec des agents tensioactifs et/ou des agents d'allongement.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 0105788 A
- WO 03026427 A
- WO 03026426 A
- WO 0021924 A
- EP 470856 A
- WO 9408999 A
- DE 4038430
- WO 9210660 A
- WO 9530661 A
- EP 303153 A
- WO 9626206 A
- WO 9831681 A
- WO 0128341 A


### In der Beschreibung aufgeführte Nicht-Patentliteratur


- Pesticide Manual. 2003
- e-Pesticide Manual of the British Crop Protection council. 2002
- **COLBY, S.R.** Calculating synergistic and antagonistic responses of herbicide combinations. *Weeds,* 1967, vol. 15, 20-22